# EUROPEAN PATENT APPLICATION

(11) **EP 1 916 856 A1**
(43) Date of publication of application: **30.04.2008**
(21) Application number: 06798470.8
(22) Date of filing: 29.09.2006
(51) Int. Cl.: H04Q 7/36, H04B 1/707, H04Q 7/38

(54) **WIRELESS COMMUNICATION MOBILE STATION APPARATUS AND RACH DATA TRANSMITTING METHOD**

(30) Priority: 30.09.2005 JP 2005287619
(71) Applicant: MATSUSHITA ELECTRIC INDUSTRIAL CO., LTD., Osaka 571-8501 (JP)
(72) Inventor: IWAI, Takashi c/o Matsushita El.Ind.Co.Ltd., 2-1-61, Shiromi, Chuo-ku, Osaka 540-6207 (JP); IMAMURA, Daichi c/o Matsushita El.Ind.Co.Ltd., 2-1-61, Shiromi, Chuo-ku, Osaka 540-6207 (JP); FUTAGI, Sadaki c/o Matsushita El.Ind.Co.Ltd., 2-1-61, Shiromi, Chuo-ku, Osaka 540-6207 (JP); MATSUMOTO, Atsushi c/o Matsushita El.Ind.Co.Ltd., 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2006/319552
(87) International publication number: WO 2007/037414

(57) **Abstract**

A mobile station capable of reducing the probability of collision of RACH data in a random access. In this mobile station, a moving speed determining part (106) determines a moving speed of the mobile station (100). A frame selecting part (105) selects, based on both an arrangement pattern indicated by arrangement pattern information and the moving speed, one of frames to be used for transmission of RACH data. In accordance with a result of the selection, the frame selecting part (105) outputs the number of symbols per block to a block dividing part (113), and also outputs the number of duplications of each of blocks to a duplicating part (114). The block dividing part (113) divides the RACH data symbols, which are sequentially received from a modulating part (112), into blocks in accordance with the number of symbols per block received from the frame selecting part (105), thereby generating RACH data blocks. The duplicating part (114) duplicates the RACH data blocks in accordance with the number of duplications received from the frame selecting part (105).

## Description

### Technical Field

The present invention relates to a radio communication mobile station apparatus and RACH data transmission method.

### Background Art

RACH (Random Access Channel) is a common uplink channel and adopts random access. In mobile communication systems in the conventional W-CDMA scheme, the slotted ALOHA scheme is used for RACH data transmission (see Non-Patent Document 1). In the slotted ALOHA scheme, transmission timing of RACH data is synchronized between a plurality of radio communication mobile stations (hereinafter "mobile stations"), so that the slotted ALOHA scheme can reduce probability of collision for RACH data, compared to a normal ALOHA scheme. In the conventional W-CDMA scheme mobile communication system, a mobile station selects one of fifteen different patterns of transmission timings on a random basis and transmits RACH data.
Non-patent Document 1 : 3GPP TS 25.214 V6. 6.0 (2005-06), 6. Random access procedure

### Disclosure of Invention

### Problems to be Solved by the Invention

Studies are being conducted for transmitting necessary information as RACH data (e.g. mobile station identification information, data type, data size and Qos information) for establishing scheduled channels, when a mobile station shifts from idle mode to call mode. Consequently, unless a radio communication base station apparatus (hereinafter, "base station") receives correct RACH data due to occurrence of RACH data collision, a mobile station cannot establish scheduled channels or carry out communications.

As such, RACH data is important and desired to reduce the probability of collision.

It is therefore an obj ect of the present invention to provide a mobile station and RACH data transmission method that can reduce the probability of collision for RACH data in random access.

### Means for Solving the Problem

The mobile station of the present invention adopts a configuration including: a selection section that selects one frame from a plurality of frames which are different in a number of cyclic prefixes and a number of pilots in one frame; and a transmission section that transmits random access channel data using the selected frame.

### Advantageous Effect of the Invention

According to the present invention, mobile stations can select frames for RACH data transmission, from frames adopting appropriate frame formats in accordance with conditions of the mobile stations, thereby reducing the probability of collision for RACH data in random access.

### Brief Description of Drawings

FIG.1 is a block diagram showing a configuration of the mobile station according to Embodiment 1 of the present invention;
FIG.2 illustrates the high-speed frame according to Embodiment 1 of the present invention;
FIG.3 illustrates the low-speed frame according to Embodiment 1 of the present invention;
FIG.4 illustrates the spectrum of the high-speed frame according to Embodiment 1 of the present invention;
FIG.5 illustrates the spectrum of the low-speed frame according to Embodiment 1 of the present invention;
FIG.6 illustrates the frame arrangement pattern according to Embodiment 1 of the present invention;
FIG.7 is a block diagram showing a configuration of the mobile station according to Embodiment 2 of the present invention;
FIG.8 illustrates the spectrum of the high-speed frame according to Embodiment 2 of the present invention;
FIG.9 illustrates the spectrum of the low-speed frame according to Embodiment 2 of the present invention;
FIG.10 illustrates variations of frame arrangement patterns; and
FIG.11 illustrates variations of the low-speed frames.

### Best Mode for Carrying Out the Invention

Embodiments of the present invention will be described in detail below with reference to the accompanying drawings.

### (Embodiment 1)

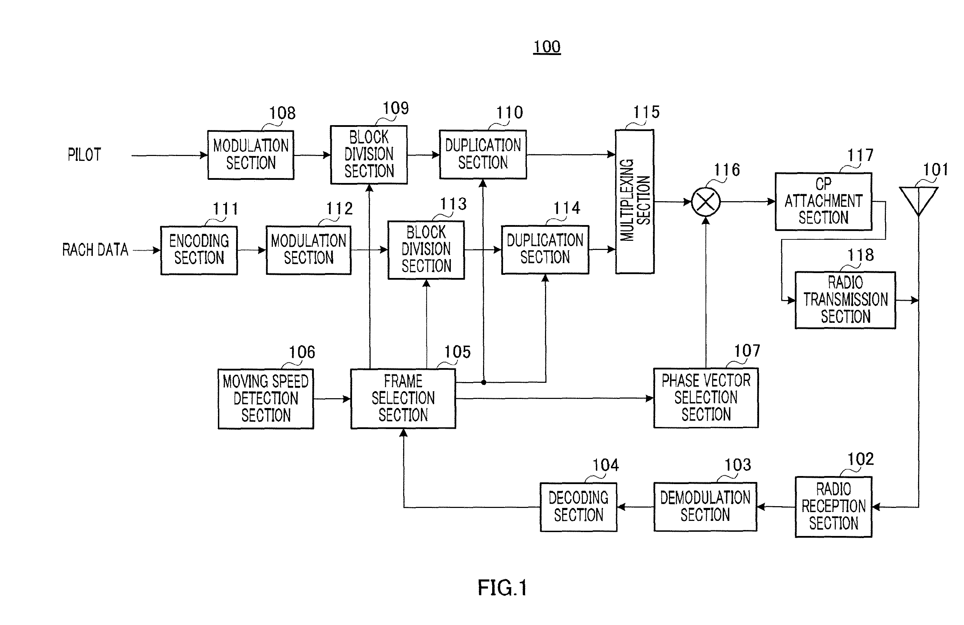

The mobile station of the present embodiment transmits RACH data by distributed-FDMA by means of IFDMA. Moreover, the mobile station of the present embodiment transmits RACH data by the slotted ALOHA scheme. FIG.1 shows a configuration of the mobile station according to the present embodiment.

In mobile station 100 shown in FIG. 1, radio reception section 102 receives the control signal transmitted from a base station via antenna 101 and performs radio receiving processing including down-conversion and A/D conversion to this control signal. This control signal includes information showing an arrangement pattern of frames for RACH data transmission (arrangement pattern information) and a threshold value of moving speed. This control signal is demodulated in demodulation section 103, decoded in decoding section 104 and inputted to frame selection section 105.

Moving speed detection section 106 detects the moving speed of mobile station 100 and outputs this to frame selection section 105.

Based on the arrangement pattern shown in the arrangement pattern information and the moving speed, frame selection section 105 selects one frame using RACH data transmission from a plurality of frames. Moreover, according to the selection result, frame selection section 105 determines the number of symbols per block (the block size) and outputs this to block division sections 109 and 113, and determines the number of duplications for each block and outputs the result to duplication sections 110 and 114. Moreover, frame selection section 105 outputs the type of the selected frame to phase vector selection section 10'7. The frame selection will be explained in detail later.

Based on the frame type inputted from frame selection section 105, phase vector selection section 107 selects one phase vector from a plurality of phase vectors and outputs the selected phase vector to multiplying section 116. The phase vector selection will be explained in detail later.

Modulation section 108 modulates pilots and generates and outputs pilot symbols to block division section 109.

Block division section 109 divides the pilot symbols inputted successively from modulation section 108 into blocks according to the block size inputted from frame selection section 105, and generates and outputs a pilot block to duplication section 110.

Duplication section 110 duplicates the pilot block according to the number of duplications inputted from frame selection section 105, and generates and outputs a plurality of the same pilot blocks to multiplexing section 115. By this duplication, the spectrum of the pilot blocks in the frequency domain has a combtooth spectrum arranged in the frequency domain at regular intervals in accordance with the number of duplications, so that it is possible to multiplex pilots for a plurality of mobile stations in the frequency domain (that is, user-multiplexing of pilots in the frequency domain).

Encoding section 111 encodes RACH data and outputs the RACH data after coding to modulation section 112.

Modulation section 112 modulates the RACH data after coding, generates and outputs the RACH data symbols to block division section 113.

Block division section 113 divides the RACH data symbols inputted successively from modulation section 112 into blocks according to the block size inputted from frame selection section 105, and generates and outputs RACH data blocks to duplication section 114.

Duplication section 110 duplicates the RACH data blocks according to the number of duplications inputted from frame selection section 105, and generates and outputs a plurality of the same RACH data blocks to multiplexing section 115. By this duplication, the spectrum of the RACH data blocks in the frequency domain has a combtooth spectrum arranged in the frequency domain at regular intervals in accordance with the number of duplications, so that it is possible to multiplex RACH data for a plurality of mobile stations in the frequency domain (that is, user-multiplexing of RACH data in the frequency domain).

Multiplexing section 115 time-multiplexes the pilot blocks and the RACH data blocks and outputs these to multiplying section 116.

Multiplying section 116 shifts the phases of the pilot blocks and the RACH data blocks by multiplying the pilot blocks and the RACH data blocks by the phase vector selected in phase vector selection section 107, and outputs the results to CP (cyclic prefix) attachment section 117.

CP attachment section 117 attaches the same block as the tail part of the block, to the beginning of the block, to provide a CP, and outputs the block with an attachment of a CP, to radio transmission section 118. By attaching a CP to each block, the base station can prevent intersymbol interference ("ISI") during which delay time of a delayed wave stays within the duration of the CP.

Radio transmission section 118 performs radio transmission processing including D/A conversion, amplification and up-conversion, on each block with a CP, and transmits the result from antenna 101 to a base station. That is, radio transmission section 118 transmits RACH data using the frame selected by frame selection section 105.

Next, frame selection and phase vector selection will be explained here in detail.

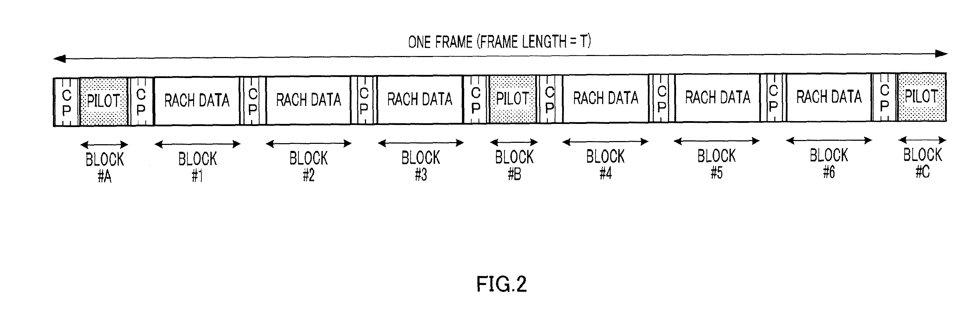

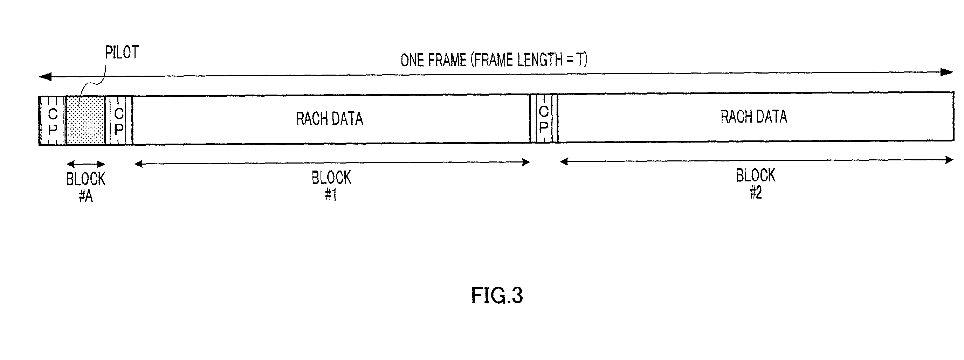

First, according to the present embodiment, as shown in FIGs.2 and 3, two kinds of frames, which are different in the number of CP's and the number of pilot blocks in one frame (frame length = T), are used for RACH data transmission. The frame shown in FIG.2 is used for a mobile station moving at high speed (the high-speed frame) and the frame shown in FIG.3 is used for a mobile station moving at low speed (the low-speed frame). Incidentally, the frame format of the high-speed frame is the same as the conventional frame format and has a format that makes it possible to suppress quality deterioration sufficiently, even for the mobile station influenced by fading due to high moving speed. That is, the frame format of high-speed frame is set in consideration of the mobile station in the poorest channel environments.

As shown in FIGs. 2 and 3, the high-speed frame and low-speed frame have the same frame length, and the number of CP's and the number of pilot blocks in the low-speed frame are less than in the high-speed frame. That is, the high-speed frame includes total nine blocks of the pilot blocks #A to #C and the RACH data blocks #1 to #6 in one frame, and each CP is attached to the nine blocks. On the other hand, the low-speed frame includes total three blocks of the pilot block #A and the RACH data blocks #1 and #2 in one frame, and each CP is attached to the three blocks. Consequently, the block size of the RACH data blocks for the low-speed frame can be larger than for the high-speed frame. For example, here, the block size of the RACH data blocks is 128 symbols in the high-speed frame and 384 symbols in the low-speed frame. Moreover, the block size of the pilot blocks is 64 symbols in the high-speed frame and 34 symbols in the low-speed frame.

Here, the low-speed frame is used for a mobile station moving at low speed and the high-speed frame is used for a mobile station moving at high speed, and so quality deterioration of the low-speed frame due to influence of fading is smaller than of the high-speed frame. Consequently, the number of pilots and CP's required in the low-speed frame to prevent deterioration in transmission quality is less than the number of pilots and CP's required in the high-speed frames. Then, the block size of the pilot blocks in the low-speed frame is made smaller than in the high-speed frame and the number of pilot blocks and CP' s in the low-speed frame is made less than in the high-speed frame and the block size of the RACH data blocks is increased by the decreasing block size of the pilot blocks and the number of pilot blocks and CP's. Moreover, the low-speed frame is used for a mobile station moving at low speed, and so even when the block size of the RACH data blocks is increased, quality deterioration due to the influence of fading is insignificant.

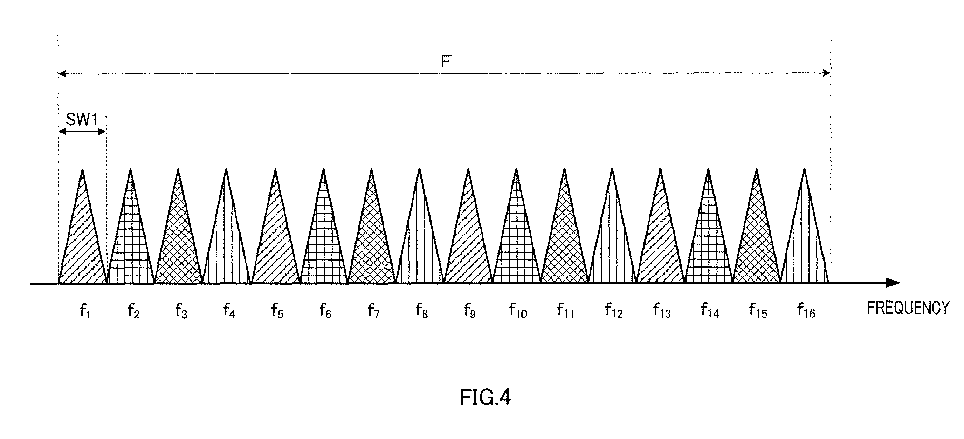

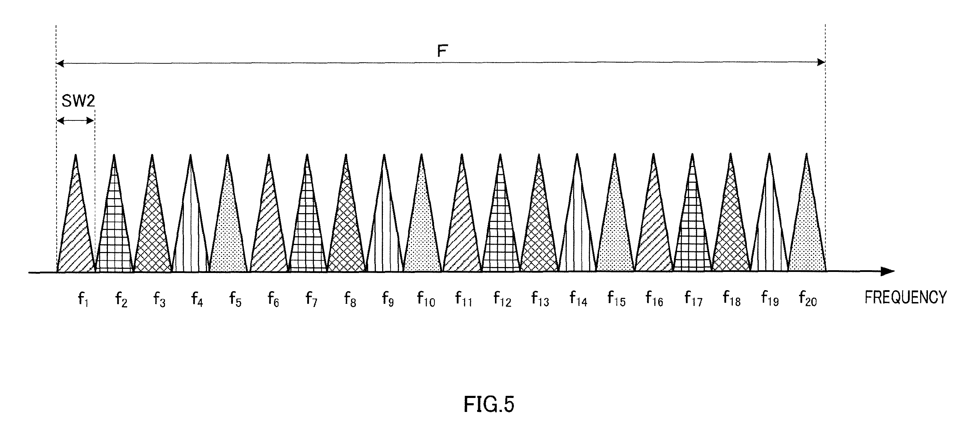

Next, FIG.4 shows the spectrum of RACH data blocks for the high-speed frame, and FIG.5 shows the spectrum of RACH data blocks for the low-speed frame. Bandwidth F for RACH data transmission is the same between the high-speed frame and the low-speed frame. The block size of the RACH data blocks for the low-speed frame as above is larger than for the high-speed frame, so the number of samples for RACH data in the low-speed frame can be increased higher than in the high-speed frame. If the number of samples for RACH data is N, the width SW of a subcarrier in the frequency domain is expressed as SW = F/N, and so, when the number of samples is increased, the width of a subcarrier in the frequency domain becomes narrower. That is, SW2 is narrower than SW1 in FIGs.4 and 5.

Then, the number of subcarriers that can be included in frequency bandwidth F increases when the width of a subcarrier becomes narrower. In the examples of FIGs.4 and 5, the high-speed frame can include 16 subcarriers f₁ to f₁₆ in frequency bandwidth F. On the other hand, the low-speed frame can include 20 subcarriers f₁ to f₂₀ in frequency bandwidth F. RACH data for a new mobile station can be assigned to the subcarriers increased. For example, in FIG.4, mobile station #1 is assigned subcarriers f₁, f₅, f₉ and f₁₃, mobile station #2 is assigned subcarriers f₂, f₆, f₁₀ and f₁₄, mobile station #3 is assigned subcarriers f₃, f₇, f₁₁ and f₁₅, and mobile station #4 is assigned subcarriers f₄, f₈, f₁₂ and f₁₆. On the other hand, in FIG.5, mobile station #1 is assigned subcarriers f₁, f₆, f₁₁ and f₁₆, mobile station #2 is assigned subcarriers f₂, f₇, f₁₂ and f₁₇, mobile station #3 is assigned subcarriers f₃, f₈, f₁₃ and f₁₈, mobile station #4 is assigned subcarriers f₄, f₉, f₁₄ and f₁₉, and in addition, newmobile station #5 can be assigned subcarriers f₅, f₁₀, f₁₅ and f₂₀. In this way, the block size of the RACH data blocks for the low-speed frame is made larger than for the high-speed frame, so that, in the frequency domain, more RACH data can be multiplexed in the low-speed frame than in the high-speed frame, and the number of RACH data that can be multiplexed in the frequency domain in the low-speed frame can be increased higher than in the high-speed frame. That is, in the frequency domain, the number of users of RACH data that can be multiplexed in the low-speed frame can be increased higher than in the high-speed frame. In the examples of FIGs.4 and 5, the number of users that can be multiplexed can be increased from 4 of the high-speed frame to 5 of the low-speed frame.

Incidentally, the number of duplications of blocks determined in frame selection section 105 controls the intervals between subcarriers which are assigned for the same mobile station. For example, by duplicating three times in the high-speed frame (which gives four of the same blocks), as shown in FIG. 4, the spectrum for the same blocks can be allocated every four subcarriers. On the other hand, by duplicating four times in the low-speed frame (which gives five of the same blocks), the spectrum for the same blocks can be allocated every five subcarriers.

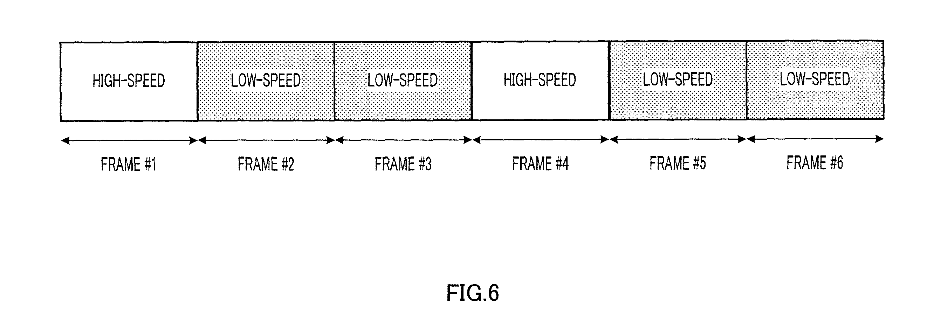

Next, FIG.6 shows an example of arrangement pattern shown in arrangement pattern information. In this example, frames #1 and #4 are high-speed frames, and frames #2, #3, #5 and #6 are low-speed frames. The base station determines the ratio between high-speed frames and low-speed frames depending on the conditions of located areas and time periods of the base station. For example, a base station located in an area where there are many slow-moving users such as pedestrians, increases the ratio of the low-speed frames, and a base station located in an area where there are many fast-moving users, for example, near expressway, decreases the ratio of low-speed frames. That is, the ratio of low-speed frames is increased when there are many slow-moving users. Generally, the number of slow-moving users is more than the number of fast-moving users, in the example shown in FIG.6, the number of low-speed frames is set twice the number of high-speed frames. In this way, a base station determines the ratio between high-speed frames and low-speed frames in accordance with conditions including located area, thereby achieving minimal probability of collision in accordance with conditions including located area. Incidentally, as mentioned above, although, a case has been explained with the conventional mobile communication system of a W-CDMA scheme where there are fifteen patterns of transmission timings which a mobile station can select for RACH data transmission, for ease of explanation, in the present invention there are six patterns of frames #1 to #6.

Based on the arrangement pattern shown in FIG.6, frame selection section 105 selects one of the frames. That is, frame selection section 105 selects one frame on a random basis depending on the moving speed detected in moving speed detection section 106, from high-speed frames #1 and #4 and low-speed frames #2, #3, #5 and #6 adopting the arrangement pattern shown in FIG.6. Frame selection section 105 compares the moving speed detected in moving speed detection section 106 with the threshold value of moving speed. When the detected moving speed is equal to or higher than the threshold value, frame selection section 105 selects one frame from high-speed frames #1 and #4, on a random basis, and, when the detected moving speed is lower than the threshold value, frame selection section 105 selects one frame from low-speed frames #2, #3, #5 and #6, on a random basis. That is, frame selection section 105 changes the frame subject to selection depenging on the detected moving speed, and, when the detected moving speed is equal to or higher than the threshold value, frames subject to selection are limited to high-speed frames.

Then, frame selection section 105 outputs the block size of the pilot blocks and the block size of the RACH data blocks, which are determined in accordance with the selected frame type, to block division sections 109 and 113, and outputs the number of duplications, which is determined in accordance with the selected frame type, to duplication sections 110 and 114. Moreover, frame selection section 105 outputs the selected frame type to phase vector selection section 107.

Phase vector selection section 107 selects one of a plurality of phase vectors, on a random basis, which are prepared in the number of users that can be multiplexed, and outputs the selected phase vector to multiplying section 116. As explained above, the number of users that can be multiplexed varies between the high-speed frame and the low-speed frame, so that the number of phase vectors subject to selection also varies between the high-speed frame and the low-speed frame. That is, in the example of FIG.4, there are four amounts of shift in the frequency domain, that is, 0, SW1, 2 x SW1 and 3 x SW1, so that, when high-speed frame is selected in frame selection section 105, phase vector selection section 107 selects, on a random basis, one of these four phase vectors corresponding to these four amounts of shift. On the other hand, in the example of FIG. 5, there are five amounts of shift in the frequency domain, that is, 0, SW2, 2 x SW2, 3 x SW2 and 4 x SW2, so that, when the low-speed frame is selected in frame selection section 105, phase vector selection section 107 selects, on a random basis, one of these five phase vectors corresponding to these five amounts of shift.

In this way, according to the present embodiment, the number of users that can be multiplexed for the low-speed frame is increased, so that it is possible to reduce the probability of collision for RACH data transmitted on a random basis from a slow-moving mobile station using the low-speed frame.

Moreover, generally, the number of fast-moving mobile stations is less than the number of slow-moving mobile stations, so that, even if the number of users that can be multiplexed is not increased in the high-speed frame, the probability of collision for RACH data transmitted from a high-speed moving mobile station does not increase. The high-speed frame is influenced by fading, as shown in FIG.2, it is rather important to make smaller the block size of RACH data than in the low-speed frame and to increase the number of pilots in one frame. Moreover, even if the number of frames that a fast-moving mobile station can select is made less than the number of frames that a low-speedmovingmobile station can select, the number of fast moving mobile stations is less than the number of slow-moving mobile stations, so that the probability of collision for RACH data transmitted from a fast-moving mobile station does not increase.

That is, according to the present embodiment, the frame for RACH data transmission is selected from frames adopting appropriate frame formats in accordance with the conditions of mobile stations, so that the probability of collision rate for RACH data can be reduced.

Incidentally, when the moving speed of mobile station 100 is equal to or higher than a threshold value, frame selection section 105 selects one of high-speed frames #1 and #4 on a random basis, and, when the moving speed of mobile station 100 is lower than the threshold value, and frame selection section 105 selects one of all frames #1 to #6 on a random basis, so that, when moving speed is slow, frames subject to selection can be increased, thereby further reducing the probability of collision for RACH data transmitted from a slow-moving mobile station.

### (Embodiment 2)

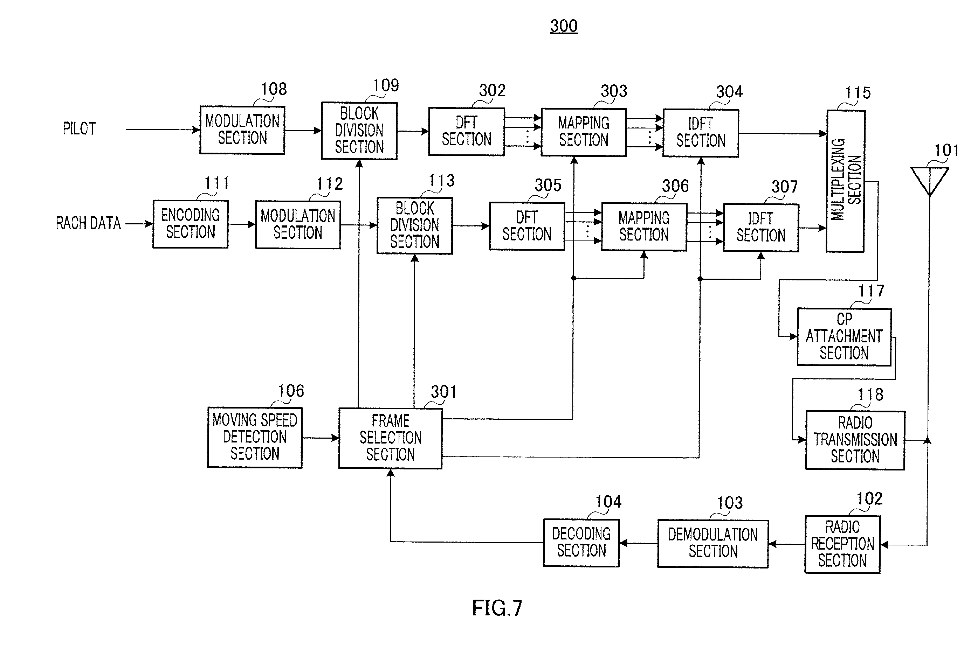

The mobile station according to the present embodiment differs from Embodiment 1 in transmitting RACH data by localized-FDMA by means of DFT-s-OFDMA. FIG.7 shows a configuration of the mobile station according to the present embodiment. In FIG.7, the same reference numerals are assigned to the same parts as in Embodiment 1 (FIG.1.) and explanations thereof will be omitted.

In mobile station 300 shown in FIG.7, based on the arrangement pattern shown in arrangement pattern information and moving speed, frame selection section 301 selects one frame using RACH data transmission from a plurality of frames. The frame selection here is the same as in Embodiment 1 and explanation in detail will be omitted. Moreover, according to the selection result, frame selection section 301 determines the number of symbols per block and outputs the number to block division sections 109 and 113, and determines the number of samples M and outputs the number M to IDFT (Inverse Desecrate Fourier Transform) sections 304 and 307. Moreover, frame selection section 301 outputs the selected frame type to mapping sections 303 and 306.

DFT (Discrete Fourier Transform) section 302 performs a L-point DFT (L < M) on the pilot block and divides the pilot block into L pilot frequency components . These L pilot frequency components are outputted to mapping section 303 in parallel.

Based on the frame type inputted from frame selection section 301, mapping section 303 selects one mapping range from a plurality of mapping ranges with respect to M points in the IDFT, and maps L pilot frequency components to the selected mapping range and maps zeroes to the rest of the mapping ranges (M - L points).

IDFT section 304 performs an IDFT on M points of which L pilot frequency components are mapped to one of the mapping ranges, generates and outputs a pilot block to multiplexing section 115.

DFT section 305 performs an L-point DFT (L < M) on the RACH data block and divides the RACH data blocks into L RACH data frequency components. These L of RACH data frequency components are outputted to mapping section 306 in parallel.

Based on the frame type inputted from frame selection section 301, mapping section 306 selects one mapping range from a plurality of mapping ranges with respect to M points in IDFT, and maps L of RACH data frequency components to the selected mapping range and maps zeroes to the rest of the mapping ranges (M - L points) .

IDFT section 307 performs an IDFT on M points of which L of RACH data frequency components are mapped to one of the mapping ranges, generates a RACH data block and output the RACH data blocks to multiplexing section 115.

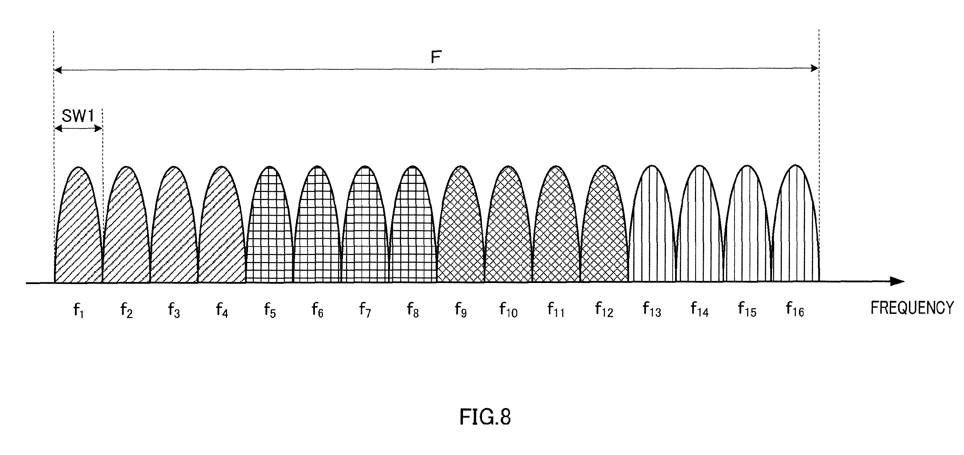

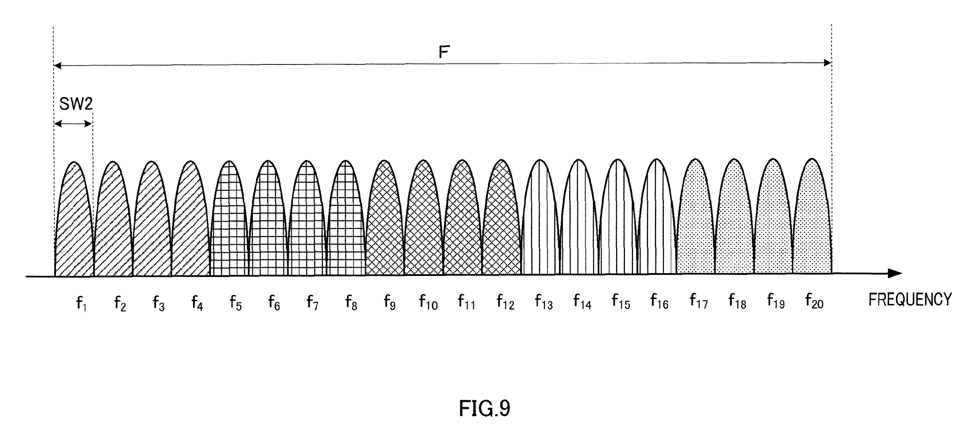

Here, FIG.8 shows the spectrum of the RACH data blocks for the high-speed frame, and FIG.9 shows the spectrum of the RACH data blocks for the low-speed frame. FIGs . 8 and 9 differ from Embodiment 1 (FIGs.4 and 5) in that, the subcarriers assigned to mobile stations are allocated in a distributed manner in Embodiment 1 but are allocated in a localized manner on a per mobile station basis in the present embodiment. That is, in the present embodiment, in FIG.8, for example, the subcarriers f₁ to f₄ are assigned to mobile station #1, the subcarriers f₅ to f₈ are assigned to mobile station #2, the subcarriers f₉ to f₁₂ are assigned to mobile station #3 and the subcarriers f₁₃ to f₁₆ are assigned to mobile station #4. On the other hand, in FIG.9, subcarriers f₁₇ to f₂₀ can be further assigned to new mobile station #5. In this way, the block size of RACH data blocks for the low-speed frame is made larger than the high-speed frame, so that, similar to Embodiment 1, in the frequency domain, more RACH data can be multiplexed in the low-speed frame than in the high-speed frame, and the number of RACH data that can be multiplexed in the low-speed frame in the frequency domain can be increased higher than in the high-speed frame. That is, in the frequency domain, the number of users of RACH data that can be multiplexed in the low-speed frame can be increased higher than in the high-speed frame. In the examples of FIGs. 8 and 9, the number of users that can be multiplexed can be increased from 4 of the high-speed frame to 5 of the low-speed frame. Incidentally, in the examples of FIGs.8 and 9, when frame selection section 301 selects the high-speed frame, frame selection section 301 outputs the number of samples M = 16 to IDFT sections 304 and 307, and, when frame selection section 301 selects the low-speed frame, frame selection section 301 outputs the number of samples M = 20 to IDFT sections 304 and 307.

Moreover, selection of mapping ranges in mapping sections 303 and 306 will be carried out as follows. That is, as above, the number of users that can be multiplexed varies between the high-speed frame and the low-speed frame, so that a number of mapping ranges subject to selection also vary between the high-speed frame and the low-speed frame. That is, in the example of FIG. 8, there are four mapping ranges, that is, subcarriers f₁ to f₄, f₅ to f₈, f₉ to f₁₂ and f₁₃ to f₁₆, so that, when the high-speed frame is selected in frame selection section 301, mapping sections 303 and 306 select one of these four mapping ranges on a random basis. On the other hand, in the example of FIG.9, there are five mapping ranges, that is, subcarriers f₁ to f₄, f₅ to f₈, f₉ to f₁₂, f₁₃ to f₁₆ and f₁₇ to f₂₀, so that, when the low-speed frame is selected in frame selection section 301, mapping sections 303 and 306 select one of these five mapping ranges on a random basis.

By this means, the present embodiment has the same advantage as Embodiment 1.

Embodiments of the present invention have been described.

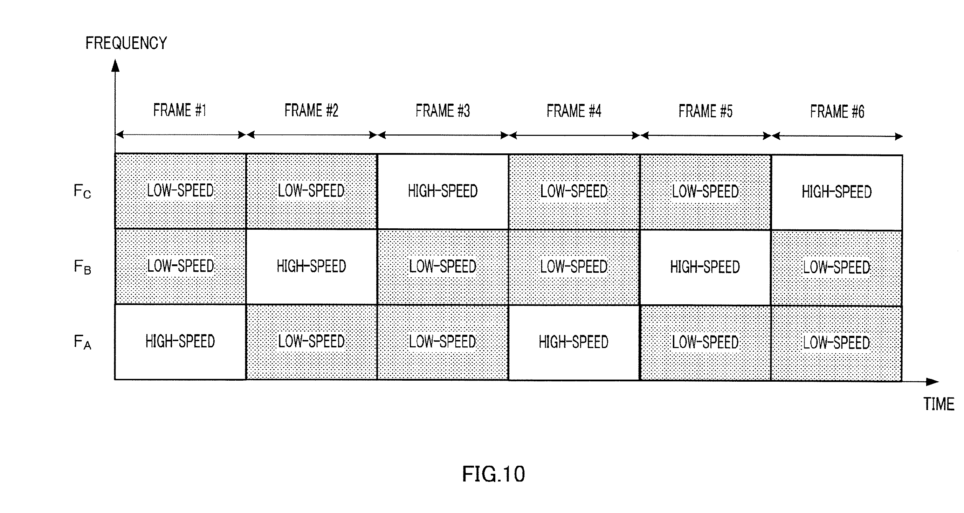

Moreover, although cases have been explained above with the embodiments where there is one frequency bandwidth for RACH data transmission, as shown in FIG. 10, when there are a plurality of frequency bandwidths for RACH data transmission (in FIG.10, three of F_{A} to F_{C}), high-speed frames and low-speed frames are individually assigned to a plurality of frequency bandwidths. That is, high-speed frames and low-speed frames are available for transmission at any transmission timing. The assignment as such is effective in situations where there are many fast-moving mobile stations, and makes it possible to reduce the probability of collision for RACH data transmitted from a fast-moving mobile station in such a situation.

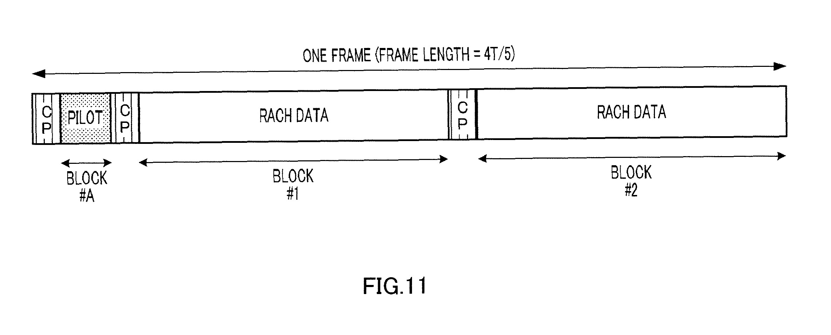

Moreover, although cases have been explained with the embodiments where the number of multiplexing is increased in the frequency domain, as shown in FIG.11, the frame length is made shorter by decreasing of pilots and CP's in the low-speed frame, so that the number of multiplexing can be increased in the time domain. For example, as shown in FIG.11, by setting the frame length of the low-speed frames in the four-fifth of the frame length of the high-speed frames, the number of low-speed frames that can be transmitted in a predetermined time period can be 1.25 times, so that the number of multiplexing in the time domain can be increased.

Moreover, a frame in the explanation of the embodiments above is also called a subframe.

Moreover, CP in the explanation in the embodiments above is also called a guard interval ("GI").

Moreover, when the number of symbols for one block (block size) is powers of 2, processing can be performed faster using the FFT (Fast Fourier Transform) and the IFFT (Inverse Fast Fourier Transform) instead of the DFT and the IDFT explained in the above embodiments.

Moreover, although cases have been explained with the embodiments using two frame types for ease of the explanation, the present invention is not limited to this, and, even if there are three or more frame types, the present invention can be implemented as described above.

Moreover, a radio communication mobile station apparatus may be referred to as "UE," a radio communication base station apparatus may be referred to as "Node-B."

Moreover, although with the above embodiments cases have been described where the present invention is configured by hardware, the present invention may be implemented by software.

Each function block employed in the description of the aforementioned embodiment may typically be implemented as an LSI constituted by an integrated circuit . These may be individual chips or partially or totally contained on a single chip. "LSI" is adopted here but this may also be referred to as "IC," "system LSI," "super LSI" or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The present application is based on Japanese Patent Application No.2005-287619, filed on September 30, 2005, the entire content of which is expressly incorporated by reference herein.

### Industrial Applicability

The present invention is suitable, for example, for mobile communication systems.

## Claims

1. A radio communication mobile station apparatus, comprising:
a selection section that selects one frame from a plurality of frames which are different in a number of cyclic prefixes and a number of pilots in one frame; and
a transmission section that transmits random access channel data using the selected frame.

2. The radio communication mobile station apparatus according to claim 1, wherein the selection section selects one frame from the plurality of frames which are different in the number of cyclic prefixes and the number of pilots in one frame depending on moving speed.

3. The radio communication mobile station apparatus according to claim 2, wherein:
the plurality of frames are divided into high speed frames and low speed frames, the low speed frames comprising fewer cyclic prefixes and pilots than the high speed frames;
the apparatus further comprises a detection section that detects the moving speed; and
the selection section selects one frame from the high speed frames and the low speed frames depending on the detected moving speed.

4. The radio communication mobile station apparatus according to claim 3, wherein the selection section changes frames subject to selection depending on the detected moving speed.

5. The radio communication mobile station apparatus according to claim 4, wherein, when the detected moving speed is equal to or higher than a threshold, the selection section limits the frames subject to the selection to the high speed frames.

6. The radio communication mobile station apparatus according to claim 4, wherein:
when the detected moving speed is equal to or higher than the threshold, the selection section selects one of the high speed frames;
when the detected moving speed is lower than the threshold, the selection section selects one of the low speed frames.

7. The radio communication mobile station apparatus according to claim 4, wherein:
when the detected moving speed is equal to or higher than the threshold, the selection section selects one of the high-speed frames; and
when the detected moving speed is lower than the threshold, the selection section selects one frame from the high speed frames and the low speed frames.

8. The radio communication mobile station apparatus according to claim 3, wherein the high speed frames and the low speed frames have a same frame length and the number of random access channel data that can be multiplexed in the frequency domain in the low-speed frame is greater than in the high-speed frame.

9. The radio communication mobile station apparatus according to claim 3, further comprising a reception section that receives a control signal showing an arrangement pattern of the high speed frames and the low speed frames, from a radio communication base station apparatus,
wherein the selection section selects one frame from the plurality of the high speed frames and the low speed frames based on the arrangement pattern.

10. A random access channel data transmission method, comprising:
selecting one frame from a plurality of frames which are different in a number of cyclic prefixes and a number of pilots in one frame; and
transmitting random access channel data using the selected frame.

11. The random access channel data transmission method according to claim 10, further comprising allocating the plurality of frames to a plurality of frequency bands for random access channel data transmission, respectively.
